# EUROPÄISCHE PATENTSCHRIFT

(11) **EP 0 429 972 B1**
(45) Veröffentlichungstag und Bekanntmachung des Hinweises auf die Patenterteilung: **26.04.1995**
(21) Anmeldenummer: 90121871.9
(22) Anmeldetag: 15.11.1990
(51) Int. Cl.: G01S 1/02

(54) **Einrichtung und Verfahren zur Überwachung einer Navigationsanlage**
Apparatus and method for monitoring navigation equipment
Appareil et méthode de surveillance d'une installation de navigation

(30) Priorität: 23.11.1989 DE 3938735
(43) Veröffentlichungstag der Anmeldung: 05.06.1991
(73) Patentinhaber: Alcatel SEL Aktiengesellschaft, D-70435 Stuttgart (DE)
(72) Erfinder: Kleiber, Herbert, W-7140 Ludwigsburg (DE)
(74) Vertreter: Pohl, Herbert, Dipl.-Ing.

(56) Entgegenhaltungen:
- EP-A- 0 200 598
- EP-A- 0 335 303
- DE-A- 3 131 494
- GB-A- 2 181 317

## Beschreibung

Die Erfindung betrifft eine Einrichtung zur Überwachung von Navigationsanlagen, insbesondere zur Überwachung von Mikrowellenlandesystemen.

Navigationsanlagen, wie z.B. Mikrowellen-Landesysteme werden dazu benutzt, Flugzeugen auch bei schlechten Sichtverhältnissen die Landung zu ermöglichen. Dabei unterscheidet man grob drei Kategorien von Landeanflugs- und Landemanövern. Diese Kategorien sind in einem Artikel von Peter J. Wroblewski "Development of Continuity of Service Requirements for the Microwave Landing System", MITRE Firmenveröffentlichung, MTR-86W243 vom September 1987, auf den Seiten 2-1 und 2-2 beschrieben. Besondere Bedeutung kommt den Landeanflügen und den Landungen der Kategorie III zu, das sind solche, bei denen sich der Pilot voll und ganz auf die Navigationsanlage verlassen muß, da er die Landebahn nicht sieht. Bei einer Landung der Kategorie III muß sichergestellt sein, daß die Navigationsanlage während des gesamten Landevorganges nicht ausfällt und weiterhin, daß die in den von der Navigationsanlage ausgestrahlten Signalen enthaltenen Informationen zuverlässig sind. Die zuerst genannte Forderung wird als "Continuity of Service" bezeichnet, die zweite als "Integrität".

Um beides, eine hohe Integrität und eine hohe Continuity of Service (COS) sicherzustellen, werden bestimmte Teile der Navigationsanlage redundant ausgeführt. Außerdem werden die von der Navigationsanlage abgestrahlten Signale von mehreren Monitoren, im allgemeinen zwei, überwacht. Bei beiden Monitoren handelt es sich um executive Monitore, d.h. um solche Monitore, die bei Auftreten eines Fehlers in den abgestrahlten Signalen Um- oder Abschaltevorgänge einleiten. Bei den bekannten Überwachungseinrichtungen werden Monitore mit gleichen Ablauffolgen benutzt, und es wird geprüft, ob beide Monitore das gleiche Ergebnis liefern. Eine solche Einrichtung hat den Nachteil, daß ein Fehler in einem der Monitore dazu führt, daß die beiden Monitore ungleiche Ergebnisse anzeigen, und infolgedessen die Navigationsanlage abschalten. Die COS wird also durch die Verwendung von zwei Monitoren mit gleichen Ablauffolgen beeinträchtigt. Ein weiterer Nachteil der Überwachungseinrichtung ergibt sich, wenn man folgendes bedenkt: Es kann vorkommen, daß in beiden Monitoren zur selben Zeit derselbe Fehler auftritt. Am Ausgang beider Monitore liegen dann dieselben Signale. Ein Fehler der von der Navigationsanlage ausgestrahlten Signale kann jetzt nicht mehr erkannt werden. Damit ist die Intigrität des Systems beeinträchtigt.

In der GB-A-2181317 sind ein Verfahren und eine Einrichtung zur Ausgabe von zur Positionsbestimmung dienender Information im Zusammenhang mit einem MLS-System angegeben. Hier werden zwei zu beiden Seiten der Landebahn-Mittellinie angeordnete Sendeeinheiten durch jeweils zugeordnete Felddetektoren überwacht. Eine der Sendeeinheiten wird ständig als Master, die andere als Slave betrieben. Zwei die Signale der Felddetektoren und zwei die Signale von Integralhohlleitern, sogenannten Manifolds, auswertende Monitore sind den Steuereinheiten zugeordnet, jedoch selbst nicht in der Lage, Sicherheitsreaktionen vorzunehmen. Letzteres bewirkt ein dem gesamten Landesystem gemeinsam zugeordneter Executive Monitor, der mit Mikroprozessoren beider Sendeeinheiten sowie mit den Monitoren der Master-Sendeeinheit verbunden ist.

Aufgabe der Erfindung ist es, eine Einrichtung zur Überwachung einer Navigationsanlage anzugeben, bei der sowohl Integrität und Continuity of Service erhöht sind.

Gelöst wird diese Aufgabe durch eine Einrichtung mit der Merkmalskombination des ersten Patentanspruches. Die Unteransprüche enthalten Weiterbildungen und Ausgestaltungen der Einrichtung.

Die erfindungsgemäße Einrichtung hat den Vorteil, daß durch die Verwendung disimilar redundanter Monitore, d.h. durch die Verwendung von Monitoren mit unterschiedlichen Ablauffolgen, die Gefahr, daß gleichzeitig gleichartige Fehler in beiden Monitoren auftreten minimal ist.

Ein Ausführungsbeispiel der Erfindung wird anhand der Figuren 1 bis 3 näher erläutert. Es zeigen:
- Fig. 1: den prinzipiellen Aufbau eines Mikrowellenlandessystemes mit zwei Monitoren,
- Fig. 2: Testsignalgenerator-Signalwert und Alarmgrenzen,
- Fig. 3: Monitor 1 und 2; Meßwerte und Alarmgrenze.

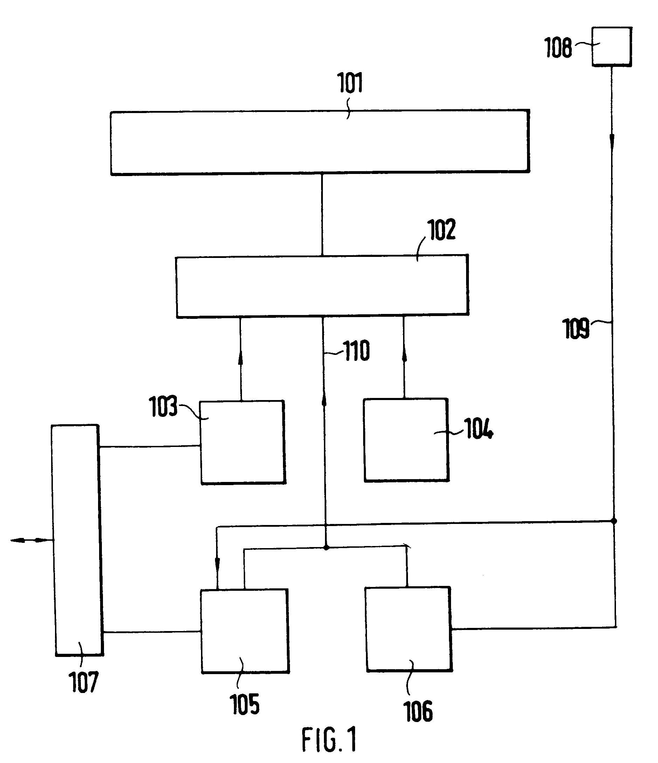

In Fig. 1 ist mit 101 ein Antennensystem bezeichnet, das von zwei mit 103 und 104 bezeichneten Transmittern versorgt werden kann. Zwischen dem Antennensystem 101 und den beiden Transmittern befindet sich ein Antennenschalter 102, der entweder den Transmitter 103 oder den Transmitter 104 mit dem Antennensystem 101 verbindet. Beim Antennensystem 101 handelt es sich um eine aus vielen einzelnen Elementen bestehende Antenne, deren Keule elektronisch schwenkbar ist. Die Ansteuerung der Antenne ist nicht Gegenstand der Erfindung und wird hier nicht näher erläutert. Mit 105 ist ein erster Monitor bezeichnet, mit 106 ein zweiter. Beide Monitore erhalten über eine Leitung 109 Signale von Sensoren 108. Die Sensoren 108 überwachen die vom Antennensystem 101 ausgestrahlten Signale. Die beiden Monitore 105 und 106 sind über eine Leitung 110 mit dem Antennenschalter 102 verbunden. Wie später noch beschrieben wird, handelt es sich bei den Monitoren um sogenannte Executive-Monitore, das sind Monitore, mit denen eine Umschaltung von einem defekten auf einen intakten Transmitter möglich ist, und die sogar die gesamte Anlage abschalten können. Mit 107 ist ein Interface bezeichnet, das neben anderen Funktionen eine Verbindung zwischen den Fluglotsen und den Monitoren 105 und 106 herstellt.

Die beiden Monitore arbeiten nun wie folgt:

Derjenige der beiden Monitore 105 oder 106, der als erster einen Fehler in den von der Antennenanlage 101 ausgestrahlten Signale detektiert, erhält die Funktion eines Master-Monitors. Über einen Statusaustausch teilt er diesen von ihm erkannten Fehler dem Co-Monitor mit, der dadurch zum Slave-Monitor wird. Der Slave-Monitor prüft nun seinerseits, ober in den von der Antennenanlage ausgestrahlten Signalen einen Fehler erkennen kann. Vom Master-Monitor werden in dieser Zeit keine Um- oder Abschaltaktionen eingeleitet oder unternommen. Erkennt der Slave-Monitor den Fehler ebenfalls, schaltet er von einem Transmitter auf den anderen um. Wird der Fehler vom Slave-Monitor nicht erkannt, schaltet der Master-Monitor nach Ablauf eines vollständigen Auswertezyklus die Anlage ab und führt die Navigationsanlage damit in einen sicheren Zustand.

Die Monitore 105 und 106 vergleichen die von der Antennenanlage ausgestrahlten Signale und Signalparameter mit fest eingestellten Alarmgrenzen. Für den Betrieb der gesamten Anlage ist es daher überaus wichtig, daß die Monitore selbst fehlerfrei arbeiten. Zu diesem Zweck werden die Monitore mit Hilfe eines Testsignalgenerators in bestimmten Zeitabständen überwacht.

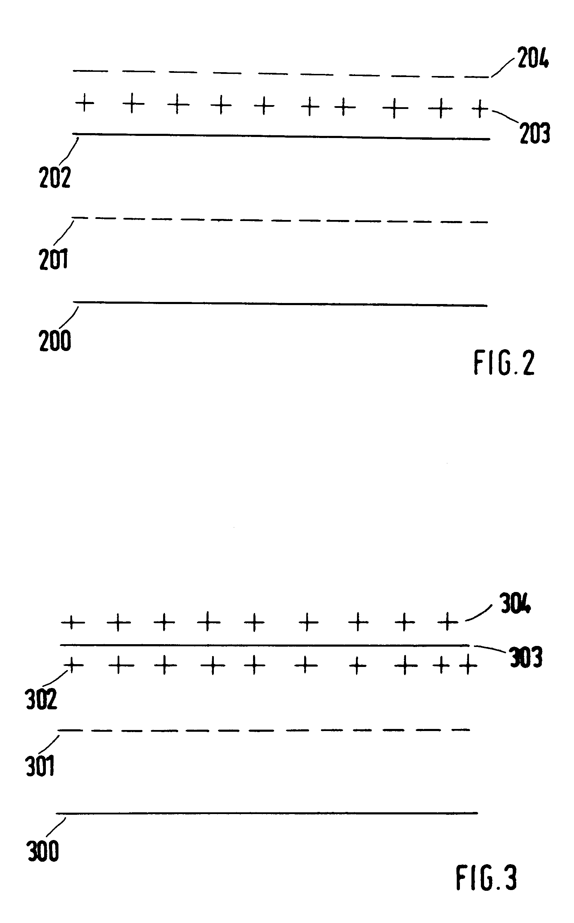

Fig. 2 zeigt Testsignalgenerator-Signalwerte und Alarmgrenzen. Mit 200 ist eine untere Alarmgrenze, mit 201 ein Nominalwert, mit 202 eine obere Alarmgrenze, mit 203 ein Testsignalgenerator-Signalwert und mit 204 eine Verifikationsgrenze bezeichnet. Mit Hilfe des Signales des Testgenerators kann jetzt geprüft werden, ob der Monitor ein fehlerhaftes Signal, also ein Signal, was oberhalb der oberen Alarmgrenze liegt, erkennt und einen Alarm auslöst. Mit Hilfe der Verifikationsgrenze 204 wird die Meßgenauigkeit des Monitors mit in die Signalprüfung einbezogen.

Wird bei der Überprüfung der Monitore ein Monitor als fehlerbehaftet erkannt, so wird ein Monitor-Fault-Flag gesetzt. Der intakte Monitor übernimmt dann eigenständig die Überwachungsfunktion. Wird im weiteren Verlauf auch für diesen Monitor ein Monitorfehler erkannt, wird die Navigationsanlage von Einrichtungen, die monitorunabhängig sind, abgeschaltet.

Soll nur eine gleichzeitige Alarmaussage beider korrekt funktionierender Monitore zu einer Umschaltaktion führen, und soll bei ungleicher Monitoraussage eine Senderabschaltung ausgelöst werden, muß man noch eine weitere Alarmprüfung einführen. Der Grund hierfür liegt in vom Antennensystem 101 ausgestrahlten Signalen, deren Meßwerte unmittelbar im Bereich der Alarmgrenze liegen. So kann nämlich der Fall eintreten, daß der eine Monitor einen Alarm meldet, während der andere aufgrund von Meßtoleranzen die Alarmgrenze noch nicht erkannt hat.

In Fig. 3 ist diese Situation dargestellt. Mit 300 ist eine untere Alarmgrenze, mit 301 ein Nominalwert, mit 302 ein vom Monitor 2 gemessener Wert, mit 303 eine obere Alarmgrenze und mit 304 ein vom Monitor 1 gemessener Wert bezeichnet. Monitor 1 hat damit erkannt, daß die Alarmgrenze überschritten wurde, daß also mit anderen Worten das von der Antennenanlage ausgestrahlte Signal fehlerhaft ist. Um jetzt eine Abschaltung der gesamten Anlage wegen ungleicher Monitoraussage zu verhindern, was einer Verminderung der Continuity of Service gleichkommt, wird eine reduzierte Alarmgrenze eingeführt. Die reduzierte Alarmgrenze ist die um einen bestimmten Faktor verminderte obere Alarmgrenze, beispielsweise 90% der oberen Alarmgrenze. Erkennt jetzt der erste Monitor eine Alarmsituation und detektiert der zweite Monitor ein Signal, was oberhalb der reduzierten Alarmgrenze liegt, wird vom zweiten Monitor, dem Slave-Monitor eine Umschaltung von dem einen auf den anderen Transmitter vorgenommen. Damit ist sichergestellt, daß toleranzbedingte unterschiedliche Aussagen beider Monitore nicht jedesmal zu einer Abschaltung der gesamten Navigationsanlage führen.

Die in den Monitoren verwendeten Alarmgrenzen sind programmierbar. Zur Erhöhung der Integrität des Systems werden die programmierten Alarmgrenzen in regelmäßigen Abständen automatisch überprüft. Es ist selbstverständlich, daß eine Änderung der Alarmgrenzen in den Monitoren nur im sogenannten Bypassmode, wenn also die Navigationsanlage nicht zur Führung von Flugzeugen benutzt wird, vorgenommen werden darf. Außerdem sind Vorkehrungen zu treffen, daß nicht solche Alarmgrenzen programmiert werden, die im Betrieb der Navigationsanlage zu Fehlfunktionen und damit zu möglichen großen Unglücken führen.

## Patentansprüche

1. Überwachungseinrichtung für Navigationsanlagen, insbesondere für Mikrowellen-Landesysteme, mit zwei Monitoren (105, 106) zur Erkennung von Signalstörungen in den von der Navigationsanlage ausgestrahlten Signalen, **dadurch gekennzeichnet**, daß die Monitore in der Lage sind, über besondere Schalteinrichtungen (102) Sicherheitsreaktionen zu veranlassen, daß für beide Monitore Programme für unterschiedliche Ablauffolgen gespeicher sind, daß eine Datenverbindung zwischen beiden Monitoren besteht, über die die Monitore untereinander Daten austauschen und sich gegenseitig eine Slave-Funktion zwordnen können, und daß in den Programmen festgelegt ist, daß der zuerst eine Signalstörung erkennende Monitor die Funktion eines Master-Monitors annimmt und dem verbleibenden Monitor die Funktion eines Slave-Monitors zuordnet und daß der Slave-Monitor, wenn er die vom Master-Monitor erkannte Signalstörung ebenfalls feststellt, eine Sicherheitsreaktion ausführt.

2. Überwachungseinrichtung nach Anspruch 1, dadurch gekennzeichnet, daß der Master-Monitor eine Sicherheitsreaktion einleitet, wenn der Slave-Monitor eine vorliegende Signalstörung nicht erkennt.

3. Überwachungseinrichtung nach Anspruch 1 oder 2, dadurch gekennzeichnet, daß als Sicherheitsreaktion eine Transmitterumschaltung oder eine Abschaltung der gesamten Navigationsanlage erfolgt.

4. Überwachungseinrichtung nach einem der Ansprüche 1 bis 3, dadurch gekennzeichnet, daß die Monitore mit je einer unteren und einer oberen nominellen Alarmschwelle ausgestattet sind und dann Signalstörungen erkennen, wenn das zu überwachende Signal eine dieser Schwellen über- bzw. unterschreitet.

5. Überwachungseinrichtung nach Anspruch 4, dadurch gekennzeichnet, daß die Monitore zu jeder nominellen eine reduzierte Alarmschwelle besitzen.

6. Überwachungseinrichtung nach Anspruch 5, dadurch gekennzeichnet, daß die reduzierte Alarmschwelle jeweils die um einen vorgebbaren Faktor reduzierte nominelle Alarmschwelle ist.

7. Überwachungseinrichtung nach Anspruch 5 oder Anspruch 6, dadurch gekennzeichnet, daß der Slave-Monitor eine Transmitterumschaltung vornimmt, wenn eine von ihm festgestellte Signalstörung die reduzierte Alarmschwelle, jedoch noch nicht die nominelle Alarmschwelle erreicht, und daß er eine Abschaltung der gesamten Anlage vornimmt, wenn die Signalstörung die nominelle Alarmschwelle erreicht.

## Claims

1. A monitoring apparatus for navigation systems, particularly for microwave landing systems, comprising two monitors (105, 106) for detecting errors in the signals transmitted by the navigation system, **characterized in** that the monitors are capable of initiating safety measures via special switching devices (102), that for both monitors, programs for different sequences of operations are stored, that there is a data link between the two monitors via which the monitors exchange data and can assign to each other a slave function, and that the programs specify that the first monitor to detect a signal performs the function of a master monitor and assigns to the other monitor the function of a slave monitor, and that, when the slave monitor also detects the signal error detected by the master monitor, the slave monitor initiates a safety measure.

2. A monitoring apparatus as claimed in claim 1, characterized in that the master monitor initiates a safety measure if the slave monitor does not detect a signal error.

3. A monitoring apparatus as claimed in claim 1 or 2, characterized in that the safety measure consists in a transmitter changeover or a shutdown of the entire navigation system.

4. A monitoring apparatus as claimed in any one of claims 1 to 3, characterized in that the monitors each have a lower nominal alarm threshold and an upper nominal alarm threshold and detect signal errors when the signal to be monitored passes above said upper nominal alarm threshold or falls below said lower nominal alarm threshold.

5. A monitoring apparatus as claimed in claim 4, characterized in that for each nominal alarm threshold, the monitors have a reduced alarm threshold.

6. A monitoring apparatus as claimed in claim 5, characterized in that the reduced alarm threshold is the nominal alarm threshold reduced by a predeterminable factor.

7. A monitoring apparatus as claimed in claim 5 or 6, characterized in that the slave monitor initiates a transmitter changeover when a signal error detected by it reaches the reduced alarm threshold but does not yet reach the nominal alarm threshold, and that the slave monitor shuts down the whole system when the signal error reaches the nominal alarm threshold.

## Revendications

1. Equipement de surveillance pour systèmes de navigation, en particulier pour systèmes d'atterrissage à hyperfréquences comportant deux moniteurs (105, 106), pour la détection de perturbations de signaux dans les signaux émis par le système de navigation, caractérisé en ce que les moniteurs sont en mesure de provoquer des réactions de sécurité par le biais d'équipements de commutation particuliers (102), en ce que, pour les deux moniteurs, des programmes de séquences fonctionnelles différentes sont mémorisés, en ce qu'il existe entre les deux moniteurs une liaison de données entre les deux moniteurs par le biais de laquelle les moniteurs échangent des données entre eux et peuvent s'affecter réciproquement une fonction asservie et en ce qu'il est stipulé, dans les programmes, que le moniteur qui détecte le premier une perturbation de signaux assume la fonction de moniteur principal et affecte au moniteur restant la fonction de moniteur asservi et en ce que le moniteur asservi, s'il constate également la perturbation de signaux détectée par le moniteur principal, met en oeuvre une réaction de sécurité.

2. Equipement de surveillance selon la revendication 1, caractérisé en ce que le moniteur principal induit une réaction de sécurité si le moniteur asservi ne détecte pas une perturbation de signaux existante.

3. Equipement de surveillance selon la revendication 1 ou 2, caractérisé en ce que à titre de réaction de sécurité, il se produit une commutation d'émetteur ou une mise hors circuit de l'ensemble du système de navigation.

4. Equipement de surveillance selon l'une des revendications 1 a 3, caractérisé en ce que les moniteurs sont munis chacun d'un seuil d'alarme nominal inférieur et d'un seuil d'alarme nominal supérieur et détectent alors des signaux de perturbation quand le signal à surveiller passe au-dessus ou au-dessous d'un de ces seuils.

5. Equipement de surveillance selon la revendication 4, caractérisé en ce que les moniteurs possèdent un seuil d'alarme réduit qui accompagne chaque seuil d'alarme nominal.

6. Equipement de surveillance selon la revendication 5, caractérisé en ce que le seuil d'alarme réduit est à chaque fois le seuil d'alarme nominal diminué d'un facteur pouvant être déterminé au préalable.

7. Equipement de surveillance selon la revendication 5 ou la revendication 6, caractérisé en ce que le moniteur asservi effectue une commutation d'émetteur si une perturbation de signaux constatée par lui atteint le seuil d'alarme réduit mais sans atteindre le seuil d'alarme nominal et en ce qu'il effectue une mise hors circuit de l'ensemble du système si la perturbation de signaux atteint le seuil d'alarme nominal.
